# EUROPEAN PATENT APPLICATION

(11) **EP 0 987 667 A1**
(43) Date of publication of application: **22.03.2000**
(21) Application number: 99306115.9
(22) Date of filing: 30.07.1999
(51) Int. Cl.: G09B 23/32, G09B 23/34, G09B 9/00, A63H 3/04

(54) **Artificial limb for training dummy**

(30) Priority: 07.08.1998 GB 9817192
(71) Applicant: Maltab Limited, Manchester M13 9PL (GB)
(72) Inventor: Trivett, Ian David, Norfolk IP22 2QN (GB)
(74) Representative: Stuttard, Garry Philip

(57) **Abstract**

An artificial limb comprising a unitary member (5) of soft elastomeric material (*eg* polyurethane). One or more cavities (2,3) in the member define a portion of the member capable of mimicking the action of a joint.

## Description

The present invention relates to non-mechanical, artificial limbs and to artificial bodies (*ie* dummies or mannekins) into which such limbs may be incorporated.

For the purposes of training, it is known to simulate real life situations encountered by humans using artificial bodies. For example, the fire service use dummies to simulate rescue from fire and smoke filled rooms and from road traffic accidents, in ladder and carry down exercises, and in casualty care and handling. Two basic types of dummy are known for this and similar purposes.

The first known fire training dummy is a very elementary construction made from wood, sand and polythene. It is heavy and lacks flexibility which makes it cumbersome to use.

The second known fire training dummy is constructed from a steel skeleton provided with mechanical joints ("hook and eye" type joints) moulded on hard vinyl. This construction has the disadvantage of being heavy and hard and the mechanical joints can be dangerous.

The present invention seeks to provide improved fire training dummies and the like having novel artificial limbs which are soft and flexible and which do not rely on mechanical joints.

Thus viewed from one aspect the present invention provides an artificial limb comprising a unitary member of soft elastomeric material incorporating one or more cavities defining a portion of the member capable of mimicking a flexible joint.

Viewed from a further aspect, the present invention provides an artificial body comprising one or more artificial limbs as hereinbefore defined.

The artificial limbs of the invention have numerous advantages over the mechanical limbs of prior art dummies. Notably, the prior art limbs are made up of a number of mechanically joined components whereas the limbs of the invention are a single entity and therefore more easily manufactured and less prone to mechanical failure.

Preferably, the artificial limbs of the invention are made from a soft elastomer such as, for example, polyurethane. Preferred are soft elastomers with shore hardness in the range 30A to 50A. Polyurethane is particularly preferred since it has a number of advantages. These advantages are *inter alia* that it is light and flexible. Especially preferred is foaming polyurethane which has additional advantages over its resinous counterpart. For example, foaming polyurethane advantageously "self-skins" which means that during moulding material builds up at (and strengthens) the cavity wall. This provides resistance to over-torsion and incorrect bending.

The use of polyurethane (preferably the use of foaming polyurethane) in the manufacture of artificial limbs and bodies represents a further aspect of the present invention.

Artificial limbs of the invention may be, for example, arms, legs, necks, torsos, hands with associated joints being knees, elbows, ankles, wrists, shoulders, hips, fingers, etc.

In accordance with the invention, the artificial limb is provided with one or more cavities defining a flexible joint of the limb. Preferably, each cavity is substantially radially disposed. Where there is more than one cavity, each cavity is preferably substantially parallel. The or each cavity may comprise opposing cavity walls which adopt a shape which is part of a substantial circle *eg* a segment, a sector, a truncated segment or a truncated sector of a substantial circle.

In a preferred embodiment, the artificial limb is formed with one or more radial slits forming a joint which permits movement in a monoaxial direction with limited torsion and provides lock-off at full extension resembling the action of a human limb. A further advantage of polyurethane is its anti-tear properties which are important since the internal end of each cavity represents a weak point when the artificial limb is flexed. For this reason, the cavities preferably connect with a hollow of larger diameter at their internal end. The hollow serves to enhance anti-tear properties and to compensate for material stress.

The cavities may be provided with plastic inserts which increase the strength of the joint and provide additional stability by withstanding over-torsion and increasing strength in the bending direction. The plastic insert may line substantially the whole of the internal surface of the cavity and hollow. The inserts may be made from a material (*eg* polypropylene or nylon) which may bond to the soft elastomer limb during manufacture. Flame treated polypropylene is useful by virtue of its flame treating which enables it to bond to polyurethane during moulding. The inserts may also be moulded with a texture or relief on the surfaces in contact with the polyurethane to increase bonding with the polyurethane.

In order to accurately mimic the action of certain limbs (*eg* the hip, shoulder, ankle and wrist), the artificial limb of the invention may be adapted to permit circumduction movement. Preferably, this may be achieved by reducing the thickness or volume of soft elastomeric material at the desired location of the artificial joint. In one embodiment, a plurality of U or V-shaped channels or grooves which extend around the circumference of the artificial limb are incorporated at the desired location. This permits greater freedom of movement at that location.

To enable the artificial limb of the invention to function as part of an artificial body, the limb may support a reinforcing internal core of material which is harder than the soft elastomeric material but which retains flexibility in all directions. This advantageously reduces the amount of soft elastomeric material required and therefore the overall cost. The soft elastomeric material may be conveniently injection moulded around the internal core which serves in particular to provide lateral strength. In use, the core runs the length of the limb and is preferably formed off-centre to improve strength in all directions.

In order to mimic the action of limbs more closely, the internal core is preferably made of a combination of materials to provide rigidity throughout and flexibility at the joint areas. To provide flexibility, the internal core comprises a flexible section which may take the form of flexible plastic tubing, rope (fabric or synthetic), woven core or cord, flexible metal (*eg* steel) cable or rope or link constructions (*eg* chains) may be used. Flexible plastic tubing is preferred. This advantageously provides lateral strength along the limb, particularly in the weakened regions. The flexible section may be connected to a rigid section which has the dual purpose of adding rigidity to the non-bending portion of the limb and adding weight. If the correct weight is calculated, it is possible to produce limbs with a realistic weight distribution thereby enhancing the realism of the simulation exercise. To provide rigidity, timber (*eg* wood dowel), metal (*eg* steel, aluminium, etc) or rigid plastics such as polyvinylchloride may be used. Steel is preferred due to its low cost and strength and the different available sizes.

The internal core of the limb is typically left exposed at one or both ends of the limb to enable fastening to other artificial limbs eg the core of an artificial arm at the shoulder may be exposed for fastening to the torso. Fastening may be achieved in a conventional manner. The limbs may be attached to the torso by means of a fixing plate. This may be embedded in the material at the end of the artificial limb during moulding. This enables the artificial limb to be readily removed for repair, servicing or replacement.

The artificial body of the invention advantageously comprises means for varying the total weight of the body (*eg* in the range 40-50kg). Preferably the artificial body comprises a torso with a roto-moulded chamber into which may be placed additional weight. The chamber typically takes the form of an artificial "lung" and is preferably provided with exterior means for internal access (*eg* a cap or lid). Particularly preferably the roto-moulded chamber provides the fixing points for the artificial limbs. The additional weight may take any convenient form eg bags filled with sand, stone, gels or liquid. Preferably the additional weight is provided by bags filled with metal shot.

The novel limbs of the invention may be prepared using known techniques. Preferred methods of manufacture are injection moulding processes which may be tailored to the requirements of the desired artificial limb.

Viewed from a yet further aspect the present invention provides a method for preparing artificial limbs comprising the steps of:
preparing a mould of the artificial limb;
injection moulding a soft elastomer onto a reinforcing core in said mould so that the mould forms cavities along the bending portion defining the joint.

The preferred soft elastomer for the process of the invention is polyurethane which is capable of "self-skinning".

It is envisaged that the artificial body of the invention may be used in simulating fire rescue, cave rescue, deep sea diving, scuba diving and oil rig rescues and also by the emergency services, armed services and in the clothing industry. The preferred use is as a fire rescue dummy.

The invention will now be described in preferred embodiments with reference to the accompanying Figures in which:
Figure 1 is a cross-section through a knee/elbow joint when straight (1a) and when bent (1b);
Figure 2 is a cross-sectional representation of an artificial limb of the invention showing the internal core;
Figure 3 is a cross-section through a shoulder joint in a flexed and unflexed state;
Figure 4 illustrates a disassembled artificial body of the invention to show the various types of joint; and
Figure 5 illustrates the movement of an assembled artificial body 1.

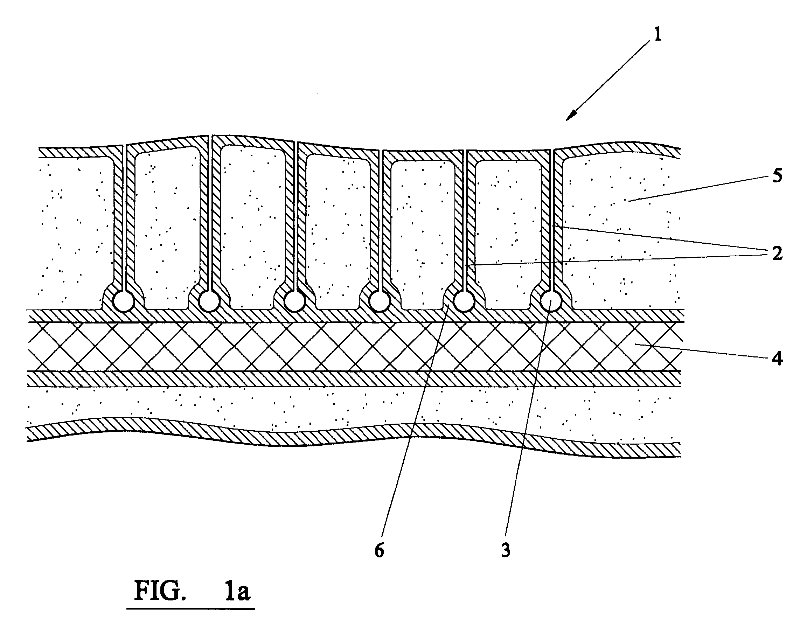

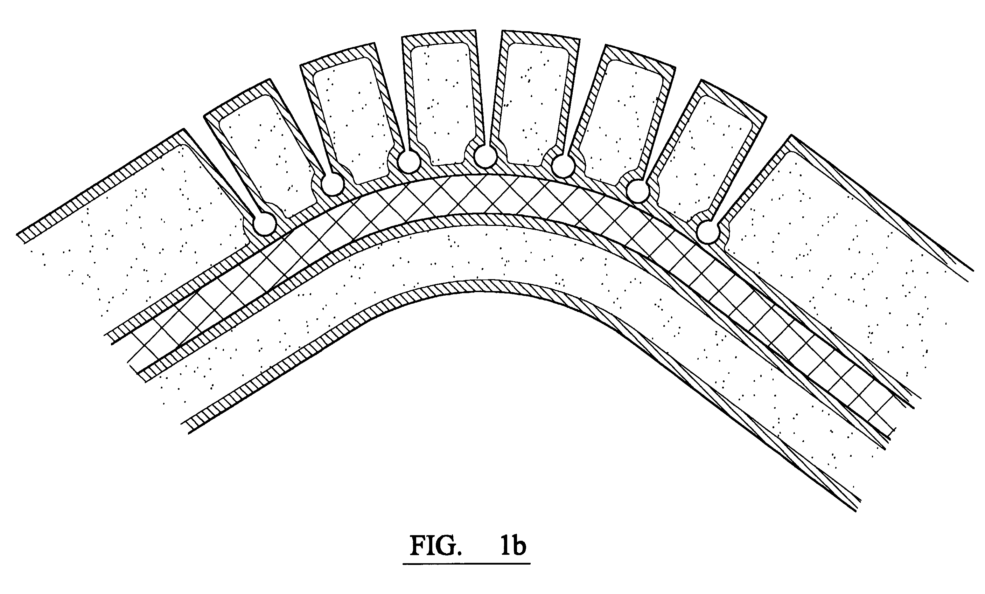

Figure 1a illustrates that portion of an artificial arm or leg which defines a joint 1 *ie* elbow or knee. The main body of the limb is a unitary member 5 made of foaming polyurethane which supports both flexible and rigid sections of an internal reinforcing core 4 made up of polyvinylchloride. The joint comprises a plurality of slits 2, each with an internal hollow 3 of larger diameter than the slit. The slits and hollows disposed about the core make up the joint which bends as shown in Figure 1b in a monoaxial fashion (and only at those parts of the limb which are provided with slits). The darker areas 6 in Figure 1a illustrate those regions in which polyurethane comes into contact with the mould wall and forms a "skin". The outside skin provides a smoother and stronger structure than the interior structure. The skin provides strength at the cavities and helps withstand reverse bending.

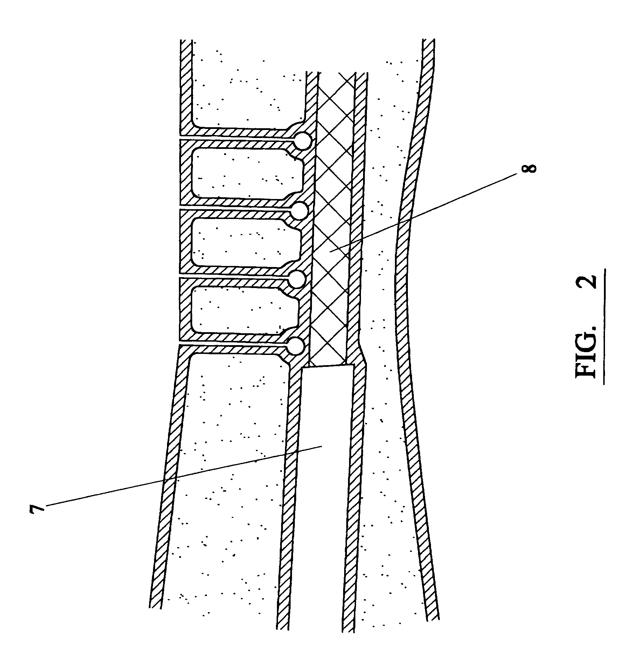

Figure 2 illustrates the intersection of the flexible section 8 made of steel and the rigid section 7 made of PVC of the internal core 4 of the artificial limb. It will be apparent that the flexible section couples with the portion of the artificial limb which comprises the slits to form the flexible joint. The rigid section 7 is attached to the flexible section 8 in a conventional manner.

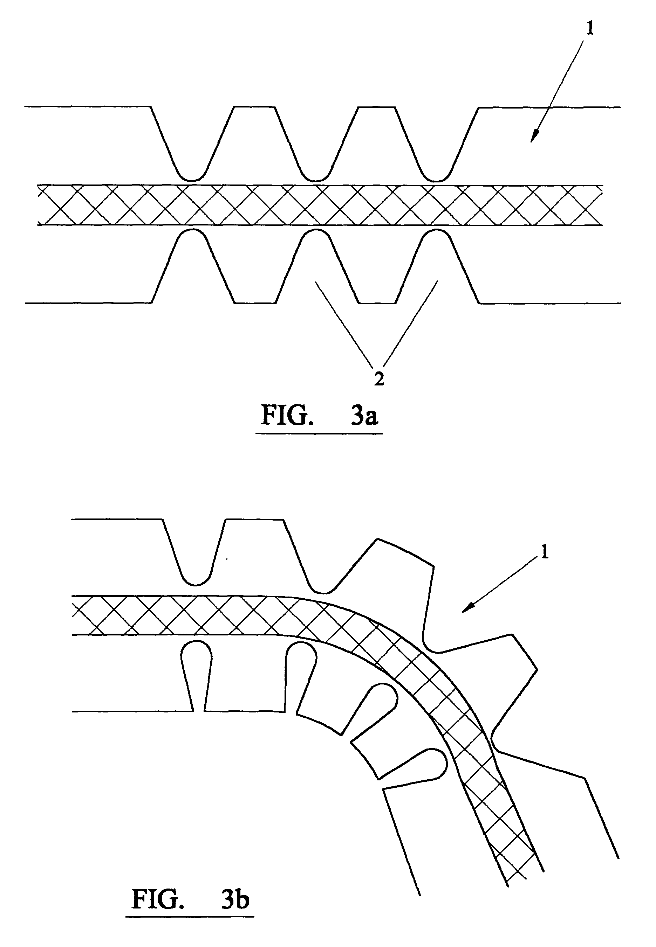

Figure 3 shows the action of a shoulder joint 1 in a preferred limb according to the invention in an unflexed mode (a) and a flexed mode (b). This part of the limb is provided with a plurality of substantially U-shaped radial cuts 2 which extend around the circumference of the limb. This permits greater freedom of movement.

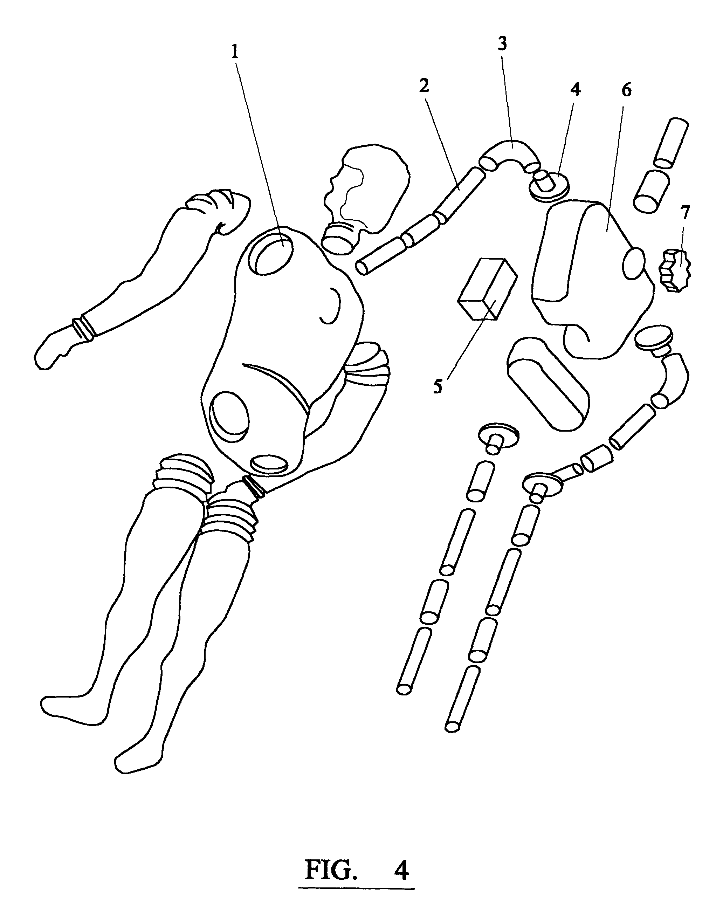

Figure 4 illustrates the internal and external arrangement of limbs in a disassembled artificial body of the invention. The body 1 comprises limbs each having an integral skin polyurethane foam. Each arm is provided with a mild steel bar 2 providing realistic limb rigidity and weight. This is attached to flexible PVC hose 3 at the artificial limb joints. Fixing plates 4 are used to connect the artificial arms to the shoulders (and similarly legs to hips). A square section steel bar provides permanent additional weight in the torso. The body is provided with a rotational moulded "lung" chamber 6 which allows the body to float or sink in water. It also allows for weight variation in the body (typically 40 up to 50kg) and additional even weight distribution. Exterior recessed screw cap 7 allows internal access to the "lung" chamber 6.

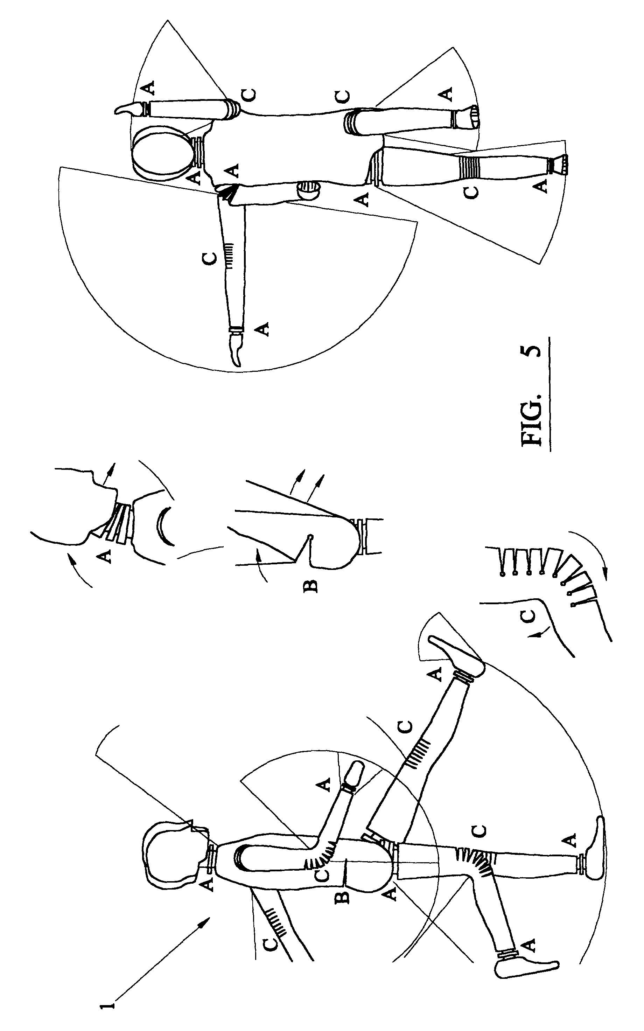

Figure 5 illustrates the movement of an assembled artificial body 1 including the neck/shoulder/hip/wrist/ankle (A), back (B) and elbow/knee (C) joints.

## Claims

1. An artificial limb comprising a unitary member of soft elastomeric material incorporating one or more cavities defining a portion of the member capable of mimicking a joint.

2. An artificial limb as claimed in claim 1 wherein the soft elastomer is polyurethane.

3. An artificial limb as claimed in claim 1 or 2 wherein the soft elastomer is foaming polyurethane.

4. An artificial limb as claimed in any preceding claim wherein the or each cavity is substantially radially disposed.

5. An artificial limb as claimed in any preceding claim wherein the cavities are substantially parallel.

6. An artificial limb as claimed in any preceding claim wherein the or each cavity comprises opposing cavity walls having a shape which is substantially part of a circle.

7. An artificial limb as claimed in any preceding claim wherein the or each cavity is a radial slit.

8. An artificial limb as claimed in any preceding claim wherein the or each cavity connects at its inner end with a hollow.

9. An artificial limb as claimed in any preceding claim wherein a portion of the unitary member is adapted to permit circumduction movement.

10. An artificial limb as claimed in any preceding claim wherein the portion of the unitary member adapted to permit circumduction movement is a portion of reduced thickness or volume at the desired location of the artificial joint.

11. An artificial limb as claimed in any preceding claim wherein the portion of the unitary member adapted to permit circumduction movement comprises a plurality of U or V-shaped channels which extend around the circumference of the artificial limb.

12. An artificial limb as claimed in any preceding claim wherein the unitary member supports a reinforcing internal core of material.

13. An artificial limb as claimed in claim 12 wherein the internal core comprises a flexible section and a rigid section.

14. An artificial limb as claimed in claim 12 or 13 in which the soft elastomer is injection moulded around the internal core.

15. An artificial limb as claimed in claims 13 or 14 wherein the flexible section is disposed substantially in that portion of the unitary member which defines the joint and couples with the cavities to mimic the action of the joint.

16. A method for manufacturing an artificial limb as claimed in any preceding claim by injection moulding.

17. An artificial body comprising one or more artificial limbs as claimed in any of claims 1 to 15.

18. An artificial body as claimed in claim 17 comprising means for varying the weight of the body.

19. An artificial body as claimed in claim 18 wherein the means for varying the weight of the body comprises a chamber in the artificial torso.
